Europäisches Patentamt

**European Patent Office**

**Office européen des brevets**

(19)

(11) Numéro de publication: **0 320 384 B1**

## FASCICULE DE BREVET EUROPEEN

(12)

(45) Date de publication de fascicule du brevet: **05.08.92**

(51) Int. Cl.⁵: **C03B 37/027**

(21) Numéro de dépôt: **88403114.7**

(22) Date de dépôt: **08.12.88**

(54) **Procédé de fabrication de fibre optique à résistance mécanique élevée par étirage sous forte tension.**

(30) Priorité: **10.12.87 FR 8717220**

(43) Date de publication de la demande:
**14.06.89 Bulletin 89/24**

(45) Mention de la délivrance du brevet:
**05.08.92 Bulletin 92/32**

(84) Etats contractants désignés:
**DE FR GB IT NL SE**

(56) Documents cités:
**EP-A- 0 112 223**

**PATENT ABSTRACTS OF JAPAN, vol. 10, no. 36 (C-328)(2093), 13 février 1986; & JP-A-60 186430 (Nippon Denshin Denwa Kosha) 21-09-1985**

**PATENT ABSTRACTS OF JAPAN, vol. 8, no. 71 (C-217)(1508), 3 avril 1984; & JP-A-58 223636 (Nippon Denshin Denwa Kosha) 26-12-1983**

**PATENT ABSTRACTS OF JAPAN, vol. 6, no. 231 (C-135)(1109), 17 novembre 1982; & JP-A-57 135739 (Nippon Denshin Denwa Kosha) 21-08-1982**

(73) Titulaire: **ALCATEL N.V.**
**Strawinskylaan 535**
**NL-1077 XX Amsterdam(NL)**

(72) Inventeur: **Boniort, Jean-Yves**
**2, rue des Mimosas**
**F-91470 Limours(FR)**
Inventeur: **Leboucq, Jacques**
**149, rue Pasteur**
**F-91700 Sainte Geneviève des Bois(FR)**

(74) Mandataire: **Laroche, Danièle**
**c/o SOSPI 14-16 rue de la Baume**
**F-75008 Paris(FR)**

## Description

La présente invention concerne la fabrication de fibres optiques à forte résistance mécanique.

On sait que les fibres optiques destinées aux câbles sous-marins de télécommunications, par exemple, doivent présenter à la fois une faible atténuation de la lumière qu'elles guident (pour diminuer le nombre des répéteurs à répartir sur la longueur du câble), et une forte résistance mécanique (pour permettre une pose relativement facile à partir d'un navire câblier).

Les fibres optiques prévues actuellement pour ce type d'utilisation sont des fibres monomodales dont les verres de coeur et de gaine optique sont faits de silice presque pure pour guider une lumière infrarouge. Elles présentent un diamètre de coeur d'environ 10 micromètres et un diamètre total de silice de 125 micromètres.

De telles fibres sont classiquement obtenues par une opération continue de fibrage, c'est-à-dire d'étirement avec déformation visco-élastique sous une tension convenable dite "de fibrage", à partir d'une préforme chauffée au delà de sa température de ramollissement Tg. Cette préforme est une masse cylindrique de silice présentant une loi de composition interne convenable en fonction du rayon. La vitesse de fibrage est asservie de façon à obtenir le diamètre final souhaité. Comme indiqué dans le document JP-A-60 186 430, un recuit de la fibre optique à une température au-dessous de la température de ramollissement suivi d'un refroidissement peuvent être alors prévus pour améliorer les qualités optiques de cette fibre.

Comme indiqué dans le document JP-A-57 135 739, un recuit de la fibre optique à une température au-dessus de la température de ramollissement de la gaine extérieure de la fibre, peut améliorer la résistance mécanique de ces fibres et une diminution des fentes à la surface de ces fibres.

Comme indiqué dans le document EP-A1-0 112 223 un recuit superficiel d'une fibre soumise à des contraintes de torsion, peut résulter en une fibre conservant la polarisation circulaire.

Cette opération de fibrage est suivie d'une opération de gainage en continu par une gaine organique de protection. Une telle gaine peut être extrudée et subir un traitement thermique de retreint sur la fibre conformément à l'enseignement du document JP-A-58 223 636. Cette gaine ne résiste pas aux hautes températures telles que celle du ramollissement de la silice. Elle ne contribue que peu à la résistance de la fibre aux forces longitudinales de traction et n'empêche pas la fibre de s'allonger et de se mettre sous forte tension en présence de celles-ci. Mais elle s'oppose aux flexions dangereuses et protège efficacement la surface extérieure de la fibre de silice contre les agressions mécaniques et chimiques. C'est par l'intermédiaire de cette gaine de protection que l'on applique à la fibre la tension de fibrage. Plus précisément cette tension est appliquée par un cabestan qui tourne autour de son axe pour entraîner la fibre gainée, c'est-à-dire munie de cette gaine de protection.

La tension de fibrage utilisée pour fabriquer de nombreuses fibres monomodales de silice est faible, par exemple 0, 1 N environ. Il est connu que la qualité optique de certaines fibres (c'est-à-dire leur aptitude à transmettre la lumière avec de faibles pertes), peut être améliorée en utilisant une tension de fibrage accrue, par exemple 1,40N environ. Ceci est surtout vrai dans le cas des fibres à fort dopage de germanium dans le coeur. Malheureusement la résistance mécanique de la fibre en est sensiblement détériorée. Plus précisément, la fréquence des ruptures à partir des microfissures superficielles passe de 0,3 rupture aux 10 Km à 1 rupture au 10 Km, au cours d'un test d'épreuve effectué sous un allongement de 1,5%.

Selon un premier procédé perfectionné connu, on diminue la fréquence de ruptures à partir de microfissures superficielles en effectuant une préparation, appelée polissage thermique, de la surface latérale de la préforme à partir de laquelle se fait le fibrage. On sait en effet que c'est à partir de cette surface latérale initiale que se forme la surface latérale de la fibre. Il apparaît donc que c'est à partir de défauts de cette surface initiale que se forment des défauts de cette surface finale. Or, on sait aussi que c'est à partir des défauts de cette surface finale que se propagent le plus souvent les fissures qui aboutissent à la rupture de la fibre.

Le polissage thermique en question consiste à chauffer brièvement la surface latérale de la préforme, avant le fibrage, à une température supérieure à sa température de ramollissement de manière à pratiquement fondre une mince couche superficielle et à en évaporer une partie. Les microfissures superficielles que l'on pouvait détecter avant cette opération ne peuvent plus l'être après.

Une telle préparation de surface est décrite dans l'article "Improvement of optical fiber strength for submarine cables" J.Y. BONIORT, J. LEBOUCQ, P. BACLE, E. REINAUDO, SPIE vol 584 OPTICAL FIBER CHARACTERISTICS AND STANDARD (1985)

Elle permet dans de nombreux cas de diminuer fortement la fréquence des ruptures de la fibre en service. Malheureusement, dans le cas des tensions de fibrage accrues précédemment évoquées, elle ne permet pas de diminuer suffisamment cette fréquence.

Selon un deuxième procédé perfectionné connu, pour diminuer la fréquence desdites ruptures, on dope une couche superficielle de la préforme avec de l'oxyde de titane. Ce dopage abaisse le coefficient de dilatation de la silice. Ce coefficient devient nul pour une teneur en mole d'oxyde de titane de 5% et négatif pour des teneurs plus élevées. Au refroidissement de la fibre la couche superficielle dopée tend à se contracter moins que la silice sous-jacente. Elle est donc mise sous contrainte de compression permanente par le reste de la section de la fibre, qui supporte alors une tension résiduelle permanente. Cette compression permanente de la couche superficielle peut valoir environ 35 MPa pour une teneur de 5% en oxyde de titane. Elle diminue le risque de propagation de fissures dans cette couche, donc le risque de rupture de la fibre à partir de fissures superficielles. Elle permet plus particulièrement d'améliorer la résistance à la fatigue des fibres, c'est-à-dire de réduire la dégradation dans le temps de la résistance mécanique de fibres soumises à un allongement permanent. Mais cette amélioration se fait au détriment de la résistance mécanique intrinsèque initiale, quand la fibre est sollicitée avec des vitesses d'allongement élevées supérieures à environ 0,1% par minute. Par ailleurs ce dopage superficiel nécessite une opération de fabrication supplémentaire qui rend le produit final plus onéreux.

L'intérêt d'un tel dopage superficiel de la préforme est décrit dans l'article "O.V.D. Process Modification for Improved Optical Fiber Strength Reliability" J.E. Ritter, J.D.HELFINSTINE présenté aux conférences MFOC WASHINGTON 16-19 Mars 1987.

La présente invention a notamment pour but de diminuer le risque de rupture de fibres de verre en présence d'efforts de traction et/ou de flexion.

Elle a plus particulièrement pour but de diminuer ce risque dans le cas de fibres optiques en verre de silice fabriquées avec une tension de fibrage élevée.

Elle a aussi pour but de conférer à de telles fibres optiques, notamment monomodales, à la fois des qualités accrues de guidage de la lumière et un faible risque de rupture à leur mise en service.

Et elle vise à atteindre ces buts grâce à un procédé de fabrication simple, sûr, et peu coûteux.

Elle a spécifiquement pour objet un procédé de fabrication de fibre optique par étirage, ce procédé étant destiné à réaliser une fibre constituée d'un verre et entourée d'une gaine organique de protection, cette fibre présentant un axe, un rayon extérieur de fibre et une composition qui est uniforme selon la longueur de la fibre et qui suit à l'intérieur de la fibre une loi de composition interne reliant la composition en chaque point au rayon relatif de ce point, le rayon relatif de tout point étant la distance mesurée de ce point à l'axe et rapportée au rayon extérieur, ce procédé comportant les opérations suivantes :

- préparation d'une préforme de verre présentant la même loi de composition interne que la fibre à réaliser, mais un rayon extérieur initial plus grand que ledit rayon extérieur de fibre,
- fibrage en continu, ce fibrage comportant les opérations suivantes :
- chauffage d'une partie extrême de la longueur de cette préforme pour la ramollir à coeur en constituant une masse viscoélastique,
- application à ladite masse viscoélastique d'une tension longitudinale de fibrage suffisante pour que le verre en provenant s'étire dans une zone d'étirement avec diminution progressive du rayon extérieur de la masse de verre jusqu'à ce que ce rayon atteigne ledit rayon extérieur de fibre, et avec conservation de ladite loi de composition interne de manière que le résultat de cette opération constitue ladite fibre,
- refroidissement progressif du verre à partir de sa surface dans cette zone d'étirement de manière que, dans une zone de solidification superficielle à la fin de cette zone d'étirement, ce verre se solidifie sur une fraction suffisante de sa section pour que cette fraction solidifiée résiste élastiquement à ladite tension de fibrage lorsque son rayon extérieur atteint ledit rayon extérieur de fibre,
- et refroidissement complémentaire de la fibre ainsi obtenue, dans une zone de refroidissement complémentaire pour que le verre de cette fibre se solidifie complétement,
- ce fibrage étant suivi dans une zone de gainage en aval de ladite zone de refroidissement complémentaire, d'une opération de gainage au cours de laquelle ladite gaine de protection est appliquée autour de la fibre résultant de ce fibrage pour en protéger la surface,
- ladite tension de fibrage étant appliquée à ladite masse viscoélastique et à ladite fibre par l'intermédiaire de cette gaine de protection dans une zone de traction située en aval de ladite zone de gainage,
- ce procédé étant caractérisé par le fait qu'il comporte en outre un traitement consistant en une opération de réchauffage superficiel sur un épaisseur moyenne comprise entre 5 et 10 microns et sous tension qui est effectuée pendant ladite opération de fibrage dans une zone de réchauffage entre lesdites zones de refroidissement complémentaire et de gainage, et dans laquelle on chauffe suffisamment la surface extérieure de la fibre tendue sous une tension comprise entre 0,4 N et 1,4 N, pour qu'une couche superficielle de cette fibre se ramollisse, de manière à faire disparaître des microfissures superficielles qui peuvent résulter dudit fibrage, la durée de ce réchauffage etant suffisamment courte pour qu'une fraction axiale majoritaire de la section de la fibre reste solide et supporte élastiquement ladite tension de fibrage,

- et une opération de deuxième refroidissement dans une zone de deuxième refroidissement entre cette zone de réchauffage et ladite zone de gainage, pour solidifier ladite couche superficielle alors que ladite fraction axiale majoritaire est encore sous tension pour supporter ladite tension de fibrage, de manière que, en aval de ladite zone de traction, cette fraction axiale majoritaire conserve une tension résiduelle permanente en appliquant une compression longitudinale permanente à cette couche superficielle solidifiée.

Elle s'applique notamment dans le cas où ladite fibre optique est constituée d'un verre de silice et présente un diamètre extérieur de 125 micromètres et où ladite tension de fibrage, mesurées sur la fibre nue, est comprise entre 60 et 140g, environ.

Dans ces cas l'énergie de réchauffage appliquée à cette fibre pour réaliser ladite opération de réchauffage sous tension peut être apportée par un chalumeau de réchauffage fonctionnant avec des débits en oxygène et hydrogène respectifs de 5 l/min et 10 l/min environ. Elle peut être aussi apportée par tout autre moyen de chauffage approprié tels qu'un arc électrique, un laser $CO_2$...etc.

La quantité d'énergie à appliquer varie en fonction de la hauteur de la zone de chauffage et de la vitesse de fibrage.

A l'aide des figures schématiques ci-jointes on va décrire ci-après, à titre d'exemple non limitatif, comment l'invention peut être mise en oeuvre dans le cadre de l'exposé qui en a été donné ci-dessus. Il doit être compris que les éléments décrits et représentés peuvent, sans sortir du cadre de l'invention, être remplacés par d'autres éléments assurant les mêmes fonctions techniques. Lorsqu'un même élément est représenté sur plusieurs figures il y est désigné par le même signe de référence.

La figure 1 représente une tour de fibrage pour la mise en oeuvre du procédé selon l'invention.

La figure 2 représente une vue en coupe axiale d'une partie terminale d'une dite masse viscoélastique à l'extrémité d'une préforme en cours de fibrage, et de deux tronçons d'une fibre issue de cette masse dans la tour de la figure 1.

La figure 3 représente plusieurs diagrammes représentant la variation de la contrainte longitudinale dans cette fibre en fonction du rayon à partir de l'axe de cette fibre, dans plusieurs sections droite se succèdant sur la longueur de cette fibre.

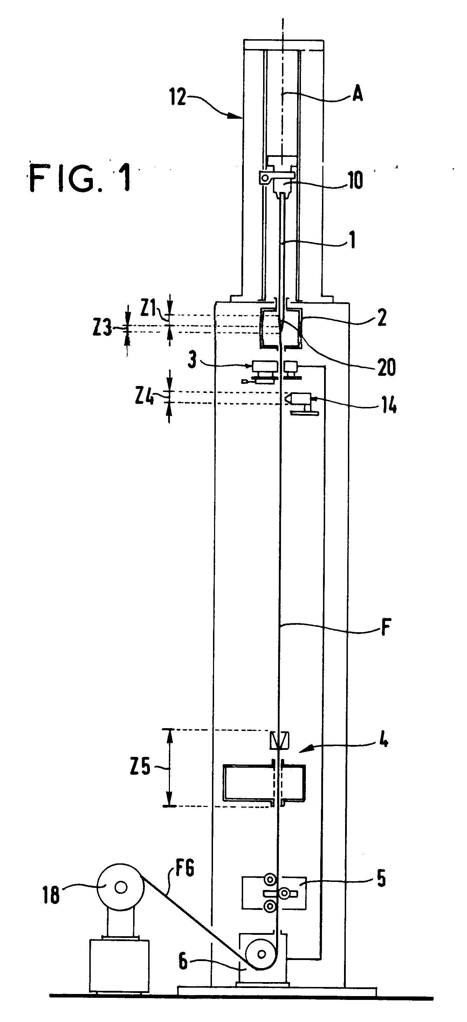

Conformément à la figure 1 une préforme 1 est disposée verticalement dans la partie supérieure d'une tour de fibrage 12. Son extrémité inférieure est disposée dans un four de fibrage 2. Elle est maintenue à son extrémité supérieure dans un organe de maintien 10. Au cours de l'opération de fibrage cet organe descend au fur et à mesure que la longueur de la préforme diminue de manière à maintenir l'extrémité inférieure de la préforme à un niveau constant dans le four 2.

Le four 2 chauffe cette extrémité inférieure de manière à former ladite masse viscoélastique 20 dont est issue une fibre optique F. La formation continue de nouveaux tronçons de cette fibre à partir de cette masse résulte d'une traction qui est exercée par un cabestan 6, au bas de la tour 12, sur des tronçons antérieurement formés. Ce cabestan tire la fibre à une vitesse de fibrage qui définit ladite tension de fibrage et qui est asservie de manière à obtenir le diamètre de fibre souhaité, ce diamètre étant le double dudit rayon extérieur de fibre.

Cet asservissement est réalisé avec l'aide, notamment, d'un capteur de mesure de diamètre 3 disposé à la sortie du four 2 dans la zone où la fibre est solidifiée à coeur. La tour comporte divers autres systèmes d'asservissement non représentés.

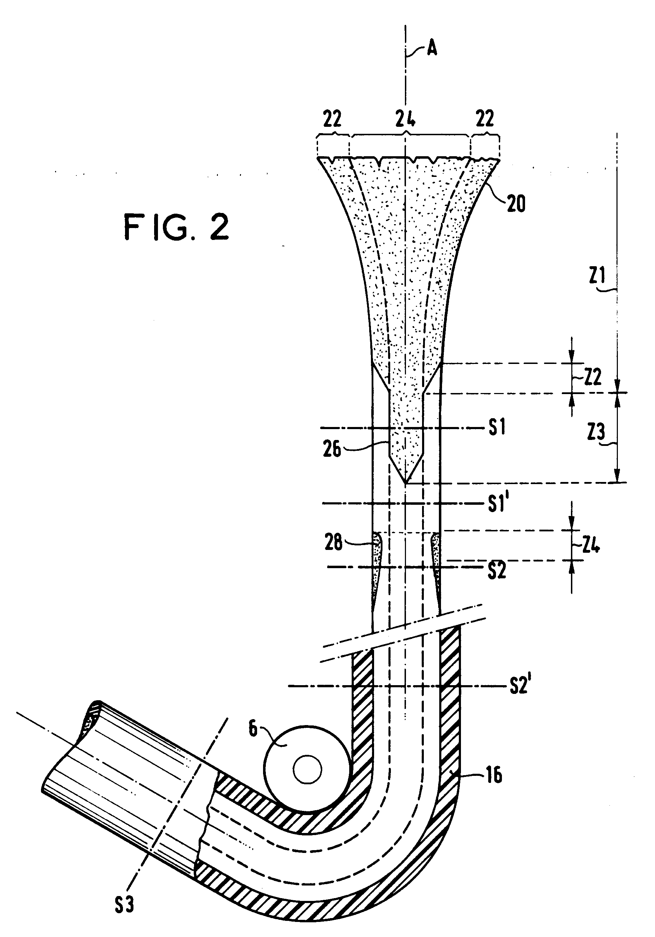

Après le capteur 3 la fibre se refroidit encore (par exemple à 200 °C environ, puis elle passe dans un chalumeau de réchauffage 14 qui effectue ladite opération de réchauffage superficiel sous tension en formant localement une couche superficielle ramollie (voir fig.2).

Elle passe ensuite dans un dispositif de gainage 4 qui forme ladite gaine organique de protection 16 (voir fig.2) par enduction de matière plastique autour de la fibre et irradiation aux rayons ultraviolets pour reticuler la matière plastique ainsi déposée sur la surface de la fibre.

La fibre gainée FG passe ensuite dans un dispositif de mesure de tension 5. Puis elle passe sur le cabestan 6 qui lui applique ladite tension de fibrage, de sorte que cette tension s'exerce entre le dispositif de maintien 10 et ce cabestan.

Le cabestan 6 renvoie la fibre gainée vers un touret de réception et de stockage 18 qui n'applique à la fibre qu'une tension d'enroulement qui est faible et qui sera considérée ci-après comme négligeable.

Conformément à la figure 2 la masse viscoélastique 20 présente un axe A. Elle est parfois appelée "cône de fibrage". Elle comporte à sa périphérie une couche de silice extérieure non dopée 22 résultant des déformations d'un tube support à partir duquel la préforme 1 a été formée par des dépôts de couches internes successives et par un retreint pour supprimer l'espace vide axial résiduel. Autour de l'axe A, à l'intérieur de la couche 22, la masse 20 comporte une partie axiale 24 constituée de silice dopée de diverses manières, selon ladite loi de composition interne, pour former ultétieurement la gaine optique et le coeur de la fibre optique à fabriquer. Cette partie axiale résulte de la déformation des couches internes qui ont été antérieurement déposées sur la surface interne dudit tube support. Le dopage de la silice dans cette partie 24 fait que la température de ramolissement Tg est abaissée d'environ 100 à 200°C par rapport à celle de la couche extérieure 22. La température de la masse 20 est supérieure à ces deux températures de sorte que la matière y est ramollie et prend un comportement viscoélastique.

La matière qui a ce comportement est représentée avec de petits points. Une ligne 26 représente une surface de transition qui est située au bas de la masse viscoélastique 20 et qui est telle que d'un côté de cette surface la matière est ramollie et a ledit comportement viscoélastique, et que de l'autre côté (au dessous, ou plus loin de l'axe A) la matière s'est solidifiée et a pris un comportement élastique parce que son refroidissement à partir de sa surface a abaissé sa température effective au dessus de sa température de ramollissement. Dans une section S1 la température effective est comprise entre la température de ramollissement de la silice non dopée et celle de la silicie dopée, ce qui entraîne que la couche extérieure a un comportement élastique et la partie axiale a un comportement viscoélastique. Par contre dans une section S1′ plus bas la matière est entièrement solidifiée. Plus bas encore, dans un section S2 au niveau et juste au dessous du chalumeau 14 de la figure 1, la couche superficielle 28 est ramollie c'est-à-dire qu'elle revient au comportement viscoélastique en raison de ladite opération de réchauffage superficiel sous tension.

Sur les figures 1 et 2 on voit aussi deux sections S2′ et S3 juste avant et juste après le cabestan 6, lesdites zones d'étirement Z1, de solidification superficielle Z2, de refroidissement complémentaire Z3, de réchauffage Z4 au niveau du chalumeau 14 et de gainage Z5 au niveau du dispositif de gainage 5.

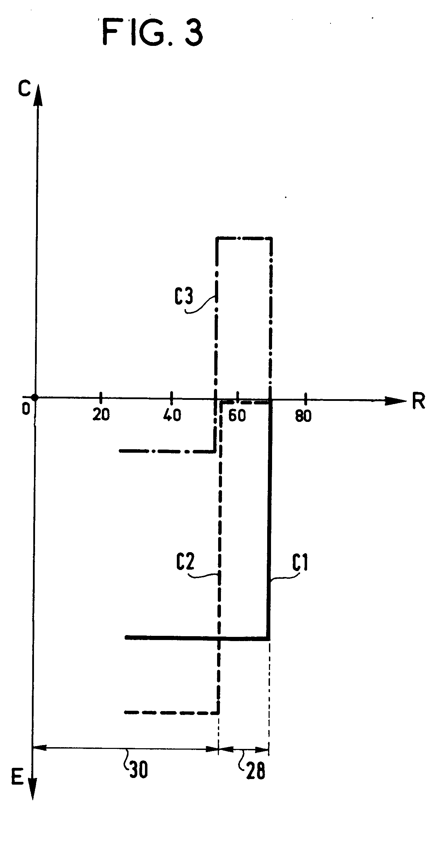

Sur la figure 3 les contraintes longitudinales de compression et d'extension dans la silice non dopée issue de la couche 22 sont représentées selon des axes de coordonnées OC et OE respectivement, et le rayon à partir de l'axe de fibre A selon un axe de coordonnée OR. Les diagrammes C1 en trait plein, C2 en trait tireté et C3 en trait mixte représentent sensiblement la variation de la contrainte longitudinale de la silice non dopée dans les sections S1 et S1′, dans les sections 2 et 2′, et dans la section S3, respectivement.

Dans la section S1 la silice non dopée se solidifie sous une contrainte qui vaut sensiblement $Tf/S$, où Tf est la tension de fibrage et S l'aire de la section de silice non dopée. La partie axiale en silice dopée est à une température supérieure à sa température de ramollissement et ne peut être sous contrainte. Dans la section S1′ cette silice dopée se solidifie sous contrainte nulle, sans modifier la répartition des contraintes.

Dans la section S2 le ramollissement de la couche superficielle de silice 28 permet la relaxation des contraintes dans cette couche et réduit l'aire de la section de silice supportant la tension de fibrage. Les contraintes d'extension dans ladite fraction axiale majoritaire restée solide 30 augmentent d'autant plus que l'épaisseur de silice ramollie est plus grande. Dans la section S2′ la couche superficielle 28 se solidifie sous contrainte nulle et la répartition des contraintes n'est pas modifiée.

Dans la section S3, la suppression de la tension de fibrage au passage du cabestan 6 a provoqué un décalage d'ensemble des contraintes: les contraintes d'extension dans la fraction axiale majoritaire 30 ont diminué et des contraintes de compression sont apparues dans la couche superficielle solide qui résulte du refroidissement de la couche 28. Ces contraintes de compression sont d'autant plus élevées que la tension de fibrage est importante.

## Revendications

1. Procédé de fabrication de fibre optique par étirage, ce procédé étant destiné à réaliser une fibre constituée d'un verre et entourée d'une gaine organique de protection, cette fibre présentant un axe, un rayon extérieur de fibre et une composition qui est uniforme selon la longueur de la fibre et qui suit à l'intérieur de la fibre une loi de composition interne reliant la composition en chaque point au rayon relatif de ce point, le rayon relatif de tout point étant la distance mesurée de ce point à l'axe et rapportée au rayon extérieur, ce procédé comportant les opérations suivantes :
   - préparation d'une préforme de verre présentant la même loi de composition interne que la fibre à réaliser, mais un rayon extérieur initial plus grand que ledit rayon extérieur de fibre,
   - fibrage en continu, ce fibrage comportant les opérations suivantes :
   - chauffage d'une partie extrême de la longueur de cette préforme pour la ramollir à coeur en constituant une masse viscoélastique (20),
   - application à ladite masse viscoélastique d'une tension longitudinale de fibrage suffisante pour que le verre en provenant s'étire dans une zone d'étirement (Z1) avec diminution progressive du rayon extérieur de la masse de verre jusqu'à ce que ce rayon atteigne ledit rayon extérieur de fibre, et avec conservation de ladite loi de composition interne, de manière que le résultat de cette opération constitue ladite fibre,

- refroidissement progressif du verre à partir de sa surface dans cette zone d'étirement de manière que, dans une zone de solidification superficielle (Z2) à la fin de cette zone d'étirement, ce verre se solidifie sur une fraction suffisante de sa section pour que cette fraction solidifiée résiste élastiquement à ladite tension de fibrage lorsque son rayon extérieur atteint ledit rayon extérieur de fibre,

- et refroidissement complémentaire de la fibre ainsi obtenue, dans une zone de refroidissement complémentaire (Z3) pour que le verre de cette fibre se solidifie complétement,

- ce fibrage étant suivi dans une zone de gainage (Z5) en aval de ladite zone de refroidissement complémentaire, d'une opération de gainage au cours de laquelle ladite gaine de protection est appliquée autour de la fibre résultant de ce fibrage pour en protéger la surface,

- ladite tension de fibrage étant appliquée à ladite masse viscoélastique (20) et à ladite fibre par l'intermédiaire de cette gaine de protection dans une zone de traction située en aval de ladite zone de gainage,

- ce procédé étant caractérisé par le fait qu'il comporte en outre un traitement consistant en une opération de réchauffage superficiel, sur une épaisseur moyenne comprise entre 5 et 10 microns sous tension qui est effectuée pendant ladite opération de fibrage dans une zone de réchauffage (Z4) entre lesdites zones de refroidissement complémentaire et de gainage, et dans laquelle on chauffe suffisamment la surface extérieure de la fibre (F) tendue, sous une tension comprise entre 0,4 N et 1,4 N, pour qu'une couche superficielle (28) de cette fibre se ramollisse, de manière à faire disparaître des microfissures superficielles qui peuvent résulter dudit fibrage, la durée de ce réchauffage étant suffisamment courte pour qu'une fraction axiale majoritaire (30) de la section de la fibre reste solide et supporte élastiquement ladite tension de fibrage,

- et une opération de deuxième refroidissement dans une zone de deuxième refroidissement entre cette zone de réchauffage et laditezone de gainage, pour solidifier ladite couche superficielle alors que ladite fraction axiale majoritaire est encore sous tension pour supporter ladite tension de fibrage, de manière que, en aval de ladite zone de traction, cette fraction axiale majoritaire conserve une tension résiduelle permanente en appliquant une compression longitudinale permanente à cette couche superficielle solidifiée.

## Claims

1. Method of manufacturing optical fibres by drawing to form a fibre consisting of glass surrounded with an organic protective jacket, the fibre having an axis, an outside fibre radius and a composition which is uniform lengthwise of the fibre and which follows inside the fibre an internal composition law relating the composition at each point to the relative radius of the point which is the distance measured from the point to the axis and referred to the outside radius, this process comprising the following operations:

    - preparing a glass preform having the same internal composition law as the fibre to be manufactured but an initial outside radius greater than said outside fibre radius,

    - continuously drawing the preform, comprising the following operations:

    - heating an end part of the length of the preform to soften the core and constitute a visco-elastic mass (20),

    - applying to said visco-elastic mass a longitudinal drawing tension sufficient to stretch the glass in a stretching area (Z1) in which the outside radius of the mass of glass is progressively reduced until it is equal to said outside fibre radius, said internal composition law being conserved so that the result of this operation constitutes said fibre,

    - progressively cooling the glass from its surface in the stretching area so that in a surface solidification area (Z2) at the end of the stretching area the glass solidifies over a sufficient fraction of its cross-section for the solidified fraction to resist elastically said drawing tension when its outside radius reaches said outside fibre radius,

- and further cooling the resulting fibre in a further cooling area (Z3) so that the glass of the fibre solidifies completely,
- such drawing being followed in a sheathing area (Z5) on the downstream side of said further cooling area by a jacketing operation during which said protective jacket is applied around the fibre obtained from drawing to protect the surface thereof,
- said drawing tension being applied to said viscoelastic mass (20) and to said fibre through the intermediary of the protective jacket in a tensioning area on the downstream side of said jacketing area,
- this process being characterised in that it further comprises:
- a surface heating operation to a mean thickness between 5 and 10 microns carried out under tension during said drawing operation in a heating area (Z4) between said further heating area and said jacketing area and in which the outside surface of the fibre (F) tensioned to a tension between 0.4 N and 1.4 N is heated sufficiently for a surface layer (28) of the fibre to soften so as to eliminate surface microcracks which may result from said drawing, the duration of such heating being sufficiently short for a majority axial fraction (30) of the cross-section of the fibre to remain solid and to withstand elastically said drawing tension,
- and a second cooling operation in a second cooling area between the heating area and said jacketing area to solidify said surface layer while said majority axial fraction is still tensioned to withstand said drawing tension so that on the downstream side of said tensioning area the majority axial fraction retains a permanent residual tension applying a permanent longitudinal compression to the solidified surface layer.

**Patentansprüche**

1. Verfahren zur Herstellung einer Lichtleitfaser durch Ziehen, wobei dieses Verfahren dazu bestimmt ist, eine Faser herzustellen, die aus einem Glas besteht und von einer organischen Schutzhülle umgeben ist, wobei diese Faser eine Achse, einen äußeren Faserradius und eine chemische Zusammensetzung aufweist, die über die Länge der Faser konstant ist und die im Inneren der Faser einem inneren Zusammensetzungsgesetz folgt, das die Zusammensetzung in jedem Punkt mit dem auf diesen Punkt bezogenen Radius verbindet, wobei der auf jeden Punkt bezogene Radius der Abstand ist, der zwischen diesem Punkt und der Achse gemessen und auf den Außenradius bezogen wird, wobei dieses Verfahren die folgenden Arbeitsgänge aufweist:

- Vorbereitung eines Glasrohlings mit dem gleichen inneren Zusammensetzungsgesetz wie die herzustellende Faser, aber mit einem ursprünglichen Außenradius, der größer ist als der Faser-Außendurchmesser,
- kontinuierliches Ziehen, das die folgenden Arbeitsgänge umfaßt:
  . Erhitzen eines Endbereichs der Länge dieses Rohlings, um ihn bis in den Kern zu erweichen, wodurch eine viskoelastische Masse (20) entsteht,
  . Anlegen einer ausreichenden Zieh-Längsspannung an diese viskoelastische Masse, damit das daraus entstehende Glas sich in einem Ziehbereich (Z1) streckt und den Außenradius der Glasmasse zunehmend verringert, bis dieser Radius den FaserAußenradius erreicht, wobei das innere Zusammensetzungsgesetz erhalten bleibt, so daß das Ergebnis dieses Arbeitsgangs die Faser darstellt,
  . fortschreitende Abkühlung des Glases ausgehend von seiner Oberfläche in diesem Ziehbereich, so daß in einem oberflächlichen Verfestigungsbereich (Z2) am Ende dieses Ziehbereichs dieses Glas sich über einen ausreichenden Teil seines Durchmessers verfestigt, sodaß dieser verfestigte Teil elastisch der Faser-Zieh-Spannung widersteht, wenn sein Außenradius den Faser-Außenradius erreicht,
  . und zusätzliche Abkühlung der so erhaltenen Faser in einem ergänzenden Abkühlbereich (Z3), damit das Glas dieser Faser sich vollständig verfestigt,

  wobei auf dieses Ziehen in einem Umhüllbereich (Z5) hinter dem ergänzenden Abkühlbereich ein Umhüll-Arbeitsgang folgt, bei dem die Schutzhülle um die aus diesem Ziehen hervorgegangene Faser gelegt wird, um deren Oberfläche zu schützen,

  wobei die Ziehspannung über diese Schutzhülle an die viskoelastische Masse (20) und die Faser in einem Zugbereich hinter dem Umhüllbereich angelegt wird, dadurch gekennzeichnet, daß das Verfahren weiter aufweist:

- eine Behandlung, die in einer oberflächlichen Erwärmung über eine mittlere Tiefe zwischen 5 und 10 $\mu$m unter Spannung besteht, die während des Zieh-Arbeitsvorgangs in einem Erwärmungsbereich (Z4) zwischen dem ergänzenden Abkühlbereich und dem Umhüllbereich durchgeführt wird, und bei der man die Außenoberfläche der mit einer Spannung zwischen 0,4 N und 1,4 gespannten Faser (F) so stark erwärmt, daß eine Oberflächenschicht (28) dieser Faser erweicht, um oberflächliche Mikrorisse zu entfernen, die beim Ziehen entstehen können, wobei die Dauer dieses Aufheizens kurz genug ist, daß ein überwiegender axialer Teil (30) des Querschnitts der Faser fest bleibt und elastisch die Ziehspannung aushält,

- und einen Arbeitsgang einer zweiten Abkühlung in einem zweiten Abkühlbereich zwischen dem Aufheizbereich und dem Umhüllbereich, um die Oberflächenschicht zu verfestigen, während der erwähnte überwiegende axiale Teil des Querschnitts noch unter Spannung steht, um die Ziehspannung zu ertragen, so daß hinter dem Zugbereich der überwiegende axiale Teil eine permanente Restspannung behält, indem eine permanente Längskompression auf die verfestigte Oberflächenschicht ausgeübt wird.

FIG. 1

FIG. 2

# FIG. 3